# EUROPÄISCHE PATENTSCHRIFT

(11) **EP 2 221 531 B1**
(45) Veröffentlichungstag und Bekanntmachung des Hinweises auf die Patenterteilung: **19.10.2016**
(21) Anmeldenummer: 10153953.4
(22) Anmeldetag: 18.02.2010
(51) Int. Cl.: F21V 19/00, F21S 8/10, F21Y 105/00, F21W 101/12, F21W 101/14

(54) **Beleuchtungseinrichtung für ein Kraftfahrzeug**
Lighting device for a motor vehicle
Dispositif d'éclairage pour un véhicule automobile

(30) Priorität: 19.02.2009 DE 102009009612
(43) Veröffentlichungstag der Anmeldung: 25.08.2010
(73) Patentinhaber: Hella KGaA Hueck & Co., 59552 Lippstadt (DE)
(72) Erfinder: Berthold, Hans Gerd, 33102, Paderborn (DE); Jestel, Dieter, 44579, Castrop-Rauxel (DE); Kornek, Alexander, 59558, Lippstadt (DE); Ruths, Torsten, 59557, Lippstadt (DE)

(56) Entgegenhaltungen:
- JP-A- 2006 331 855
- JP-A- 2006 331 856
- JP-A- 2007 172 918
- US-A1- 2005 270 794

## Beschreibung

Die Erfindung betrifft eine Beleuchtungseinrichtung für ein Kraftfahrzeug, mit einem elektrische Anschlusskontakte aufweisenden flächigen Leuchtmittel, insbesondere einem OLED, und mit einer Halterung, an der das Leuchtmittel angeordnet ist, wobei die Halterung zwischen einer Offen- und einer Schließstellung aufeinander zu- und voneinander wegbewegbare Halteteile und ein Trägerteil für die Halteteile aufweist, wobei die Halteteile in Schließstellung einander abgewandte Randbereiche des Leuchtmittels derart übergreifen, dass das Leuchtmittel zwischen den Halteteilen fixiert ist, und wobei die Halterung an mindestens einem der Halteteile elektrische Kontaktelemente aufweist, die Schließstellung der Halterung jeweils an einem ihnen zugeordneten Anschlusskontakt des Leuchtmittels zur Anlage kommen.

Eine derartige gattungsgemäße Beleuchtungseinrichtung ist aus JP 2006331856 A bekannt. Sie weist ein flächiges Leuchtmittel auf, das etwa die Form eines quadratischen Plättchens hat. An einander gegenüberliegenden Schmalseitenflächen hat das Leuchtmittel jeweils zwei voneinander beabstandete, stiftförmige Anschlusskontakte, die parallel zueinander angeordnet sind und in gerader Verlängerung der Ebene des Leuchtmittels etwa rechtwinklig zu den Schmalseitenflächen vorstehen. Dem Leuchtmittel sind zwei etwa U-förmige Halteteile zugeordnet, die derart auf den Randbereich des Leuchtmittels aufsteckbar sind, dass sie diesen und die daran angeordneten Anschlusskontakte abdecken. An den den Schmalseitenflächen des Leuchtmittels zugewandten Innenseiten der C-förmgen Halteteile sind zu den Anschlusskontakten passende Kontaktelemente angeordnet, die an den Anschlusskontakten zur Anlage kommen, wenn die Halteteile auf den Randbereich des Leuchtmittels aufgesteckt sind. Die Kontaktelemente sind mit Kontaktteilen elektrisch verbunden, die an der dem Leuchtmittel abgewandten äußeren Schmalseite der Halteteile angeordnet sind. Die Halterung hat außerdem ein etwa rahmenförmiges Trägerteil, das Öffnungen umgrenzt, in die jeweils die aus dem Leuchtmittel und den auf den Randbereich des Leuchtmittels aufgesteckten Halteteilen gebildete Anordnung einsetzbar ist. An dem Trägerteil sind Gegenkontakte angeordnet, die Gebrauchsstellung jeweils ein ihm zugeordnetes Kontaktteil des C-förmigen Halteteils kontaktieren. Die Anschlusskontakte des Leuchtmittels sind also über die Halteteile mit den Gegenkontakten des Trägerteils elektrisch verbunden. Die Beleuchtungseinrichtung hat den Nachteil, dass ihre Montage relativ aufwändig ist. Außerdem dürfen die Einzelteile der Beleuchtungseinrichtung nur geringe Maßtoleranzen haben, da das Leuchtmittel beschädigt werden kann, wenn es beim Einbau in das rahmenförmige Trägerteil verspannt wird und/oder zu hohen Druckbelastungen ausgesetzt wird. Bei Auftreten von Schwingungen kann es außerdem zu Kontaktierungsproblemen zwischen den Anschlusskontakten des Leuchtmittels und den Kontaktteilen des rahmenförmigen Trägerteils sowie zu mechanischen Beschädigungen am Leuchtmittel kommen.

Es besteht deshalb die Aufgabe, eine Beleuchtungseinrichtung der eingangs genannten Art zu schaffen, die eine einfache und schnelle Montage des Leuchtmittels an der Halterung ermöglicht.

Diese Aufgabe wird dadurch gelöst, dass die Halteteile einstückig mit dem Trägerteil verbunden sind, und dass das Trägerteil derart elastisch verformbar ist, dass die Halteteile zwischen der Offen- und der Schließstellung aufeinander zu- du voneinander wegbewegbar sind, und dass die lichte Weite zwischen Halteteilen derart auf die Abmessungen des Leuchtmittels abgestimmt ist, dass die Halteteile in der Schließstellung eine mechanische Vorspannung auf das zwischen den Halteteilen angeordnete Leuchtmittel ausüben.

In vorteilhafter Weise wird das Leuchtmittel beim Einsetzen in die Halterung mechanisch fixiert und gleichzeitig werden die elektrischen Verbindungen zwischen den Anschlusskontakten des Leuchtmittels und den Kontaktelementen der Halteteile hergestellt. Da die Halterung in Schließstellung eine Vorspannung auf das Leuchtmittel ausübt, ist dieses sicher an der Halterung fixiert. Toleranzen in den Abmessungen des Leuchtmittels und/oder der Halterung können durch die elastische Verformung der Halterung kompensiert werden. Die Elastizität der Halterung ermöglicht außerdem eine verwindungsfreie Montage des Leuchtmittels an der Halterung.

Bei einer bevorzugten Ausgestaltung der Erfindung ist das Trägerteil etwa C-förmig ausgestaltet und weist zwei durch einen Quersteg miteinander verbundene Schenkelteile auf, wobei die Halteteile an den von dem Quersteg entfernten freien Endbereichen der der Schenkelteile angeordnet sind. Die C-förmige Ausgestaltung Halterung ermöglich große Federwege zwischen der Offen- und einer Schließstellung, was die verwindungssichere Montage des flächigen Leuchtmittels an der Halterung erleichtert. Die Halterung kann als Kunststoff-Spritzgussteil ausgestaltet sein. Sie kann dadurch kostengünstig in Serienfertigung hergestellt werden.

Vorteilhaft ist, wenn die Schenkelteile durch einen Zwischenraum voneinander beabstandet sind, wenn das flächige Leuchtmittel lichtdurchlässig ist, und wenn in dem Zwischenraum zwischen dem flächigen Leuchtmittel und dem Quersteg mindestens ein weiteres Leuchtmittel angeordnet ist, insbesondere eine Leuchtdiode und/oder eine Glühlampe. Das flächige Leuchtmittel kann dann mit dem Licht des weiteren Leuchtmittels hinterleuchtet werden. Bei einer Signalleuchte kann das weitere Leuchtmittel beispielsweise die Funktion eines Bremslichts und/oder einer Nebelschlussleuchte und das flächige Leuchtmittel die Funktion eines Rücklichts aufweisen.

Bei einer zweckmäßigen Ausführungsform der Erfindung weisen die Halteteile einander zugewandte Nuten auf, in welche die einander abgewandten Randbereiche des Leuchtmittels eingreifen. Das Leuchtmittel ist dann noch besser an der Halterung fixiert. Die Nuten erstrecken sich vorzugsweise über die gesamte Länge des flächigen Leuchtmittels.

Bei einer Weiterbildung der Erfindung weist das flächige Leuchtmittel ein flächiges Basisteil mit mindestens einer daran angeordneten Lichtaustrittsfläche auf, wobei an mindestens einem einem Halteteil zugewandten Randbereich des Basisteils ein Dämpfungselement derart angeordnet ist, dass es in Schließstellung der Halteteile mit der mechanischen Vorspannung beaufschlagt wird. Durch das Dämpfungselement wird auch beim Auftreten von Vibrationen eine dauerhafte und sichere elektrische Kontaktierung zwischen den Anschlusskontakten und den Kontaktelementen ermöglicht. Außerdem ist das Leuchtmittel durch das Dämpfungselement vor mechanischer Beschädigung geschützt. Das Dämpfungselement besteht bevorzugt aus einem verformbaren Werkstoff, wie z.B. aus Gummi oder einem Elastomerwerkstoff. Über das Dämpfungselement können die Haltekräfte besonders gleichmäßig von der Halterung auf das flächige Leuchtmittel übertragen werden. Dadurch wird eine verwindungssichere Montage des Leuchtmittels zusätzlich erleichtert. Außerdem werden Vibrationen, die an der Halterung auftreten, nicht oder nur abgeschwächt auf das Basisteil übertragen.

Das Dämpfungselement weist bevorzugt einen etwa U-förmigen Querschnitt auf und übergreift den Randbereich des flächigen Basisteils. Die Haltekräfte können dann noch gleichmäßiger von der Halterung auf das flächige Basisteil übertragen werden.

Bei einer vorteilhaften Ausgestaltung der Erfindung greift das Dämpfungselement in die Nut des Halteteiles ein und erstreckt sich entlang der Nut, wobei das Dämpfungselement im Bereich mindestens eines Kontaktelements eine Aussparung aufweist, in die das Kontaktelement eingreift. Die Aussparung ist bevorzugt randoffen ausgestaltet, d.h. die Breite des Dämpfungselements ist im Bereich des Kontaktelements reduziert.

Bei einer Weiterbildung der Erfindung ist in mindestens einem Schenkelteil ein Kanal für die Aufnahme einer elektrischen Leitung und/oder einer Leiterbahn vorgesehen, die mit einem Kontaktelement verbunden ist. Die Leitung oder Leiterbahn kann dann in dem Kanal verdeckt angeordnet sein, so dass sie für den Benutzer der Beleuchtungseinrichtung nicht sichtbar ist. Die Beleuchtungseinrichtung ermöglicht dadurch ein schönes Design. Außerdem ist die Leitung bzw. Leiterbahn in dem Kanal vor mechanischer Beschädigung geschützt, insbesondere während der Montage der Beleuchtungseinrichtung. Die Leiterbahn kann auch aus einem elektrisch leitenden Werkstoff bestehen, der flüssiger, fließ- oder schüttfähiger Form in den Kanal eingefüllt ist. Der Werkstoff kann beispielsweise ein Kunststoff sein. Der Werkstoff kann eine Vergussmasse mit darin eingebetteten, elektrisch leitfähigen Partikeln aufweisen. Ferner besteht die Möglichkeit, dass der Werkstoff Dotierungselemente enthält. Es ist aber auch denkbar, dass die Leiterbahn durch ein Stanzgitter gebildet ist, das mit Kunststoff umspritzt ist.

Die Anschlusskontakte sind bevorzugt an der dem Quersteg zugewandten Rückseite des flächigen Leuchtmittels angeordnet und die Kontaktelemente sind als Federzungen ausgestaltet, die rechtwinklig zur Ebene des flächigen Leuchtmittels elastisch auslenkbar sind. Durch diese Federkontakte wird eine hohe Lebensdauer der elektrischen Kontaktierung ermöglicht. Selbstverständlich sind auch andere Ausgestaltungen der Kontaktelemente denkbar. Die Anschlusskontakte können beispielsweise am schmalseitigen Außenrand des Leuchtmittels angeordnet und die Kontaktelemente zwischen den Anschlusskontakten und den Halteteilen vorgesehen sein.

Nachfolgend ist ein Ausführungsbeispiel der Erfindung anhand der Zeichnung näher erläutert. Es zeigt
- Fig. 1: eine Schrägansicht auf die Vorderseite einer Beleuchtungseinrichtung für ein Kraftfahrzeug, die einen an einer Halterung angeordneten Flächenemitter aufweist,
- Fig. 2: eine Schrägansicht auf die Vorderseite der Halterung,
- Fig. 3: eine Seitenansicht der Beleuchtungseinrichtung,
- Fig. 4: eine Aufsicht auf die Beleuchtungseinrichtung und
- Fig. 5: einen Querschnitt durch die Beleuchtungseinrichtung.

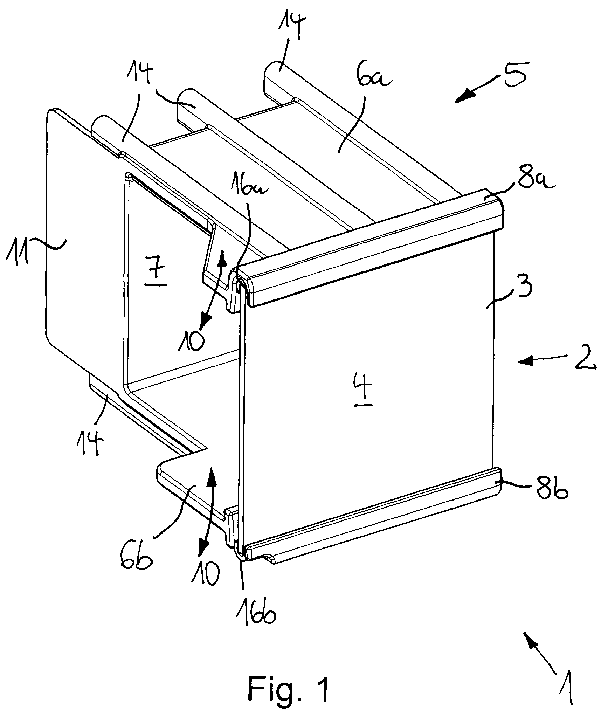

Eine in Fig. 1 im Ganzen mit 1 bezeichnete Beleuchtungseinrichtung für ein Kraftfahrzeug weist ein als Flächenemitter ausgestaltetes Leuchtmittel 2 auf, das ein etwa rechteckiges Basisteil 3 hat, das an einer seiner Flachseiten eine Lichtaustrittsfläche 4 hat. Das Basisteil 3 hat an seiner Rückseite mehrere, in der Zeichnung nicht näher dargestellte Anschlusskontakte, die aneinander gegenüberliegenden Randbereichen des Basisteils 3 mit seitlichem Abstand zueinander angeordnet sind.

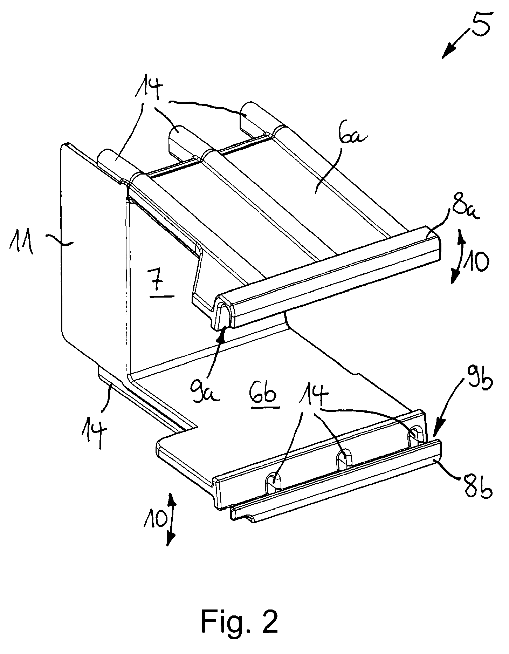

Das Leuchtmittel 2 ist an einer Halterung 5 angeordnet, die einen etwa C-förmiges Trägerteil aufweist. In Fig. 2 ist erkennbar, dass das Trägerteil zwei etwa parallel zueinander angeordnete Schenkelteile 6a, 6b aufweist, die durch einen Quersteg 7 miteinander verbunden sind. Zum Fixieren des Leuchtmittels 2 an der Halterung ist an die von dem Quersteg 7 entfernten Randbereiche der Schenkelteile 6a, 6b jeweils ein Halteteil 8a, 8b einstückig angeformt, das an seiner dem jeweils gegenüberliegenden anderen Halteteil 8b, 8a zugewandten Seite eine Nut 9a, 9b aufweist, die etwa parallel zu der Ebene verläuft, in der sich der Quersteg 7 des Trägerteils erstreckt.

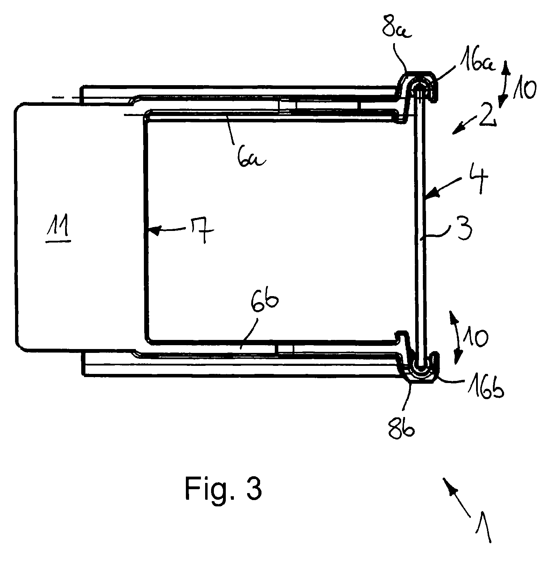

Die Halterung 5 besteht aus einem biegeelastischen Werkstoff, dessen Biegesteifigkeit derart gewählt ist, dass die Halteteile 8b, 8a in Richtung der Doppelpfeile 10 zwischen einer Offen- und einer Schließstellung aufeinander zu- und voneinander wegbewegbar sind. In der Offenstellung ist der lichte Abstand zwischen den Halteteilen 8b, 8a größer als die entsprechende Querschnittsabmessung des Leuchtmittels 2, so dass dieses bei der Fertigung der Beleuchtungseinrichtung 1 zwischen die Halteteile 8b, 8a einsetzbar ist. Wie in Fig. 3 erkennbar ist, übergreifen die Halteteile 8b, 8a in Schließstellung einander abgewandte Randbereiche des Leuchtmittels 2. Dabei greifen diese Randbereiche jeweils in eine der Nuten der Halteteile 8b, 8a formschlüssig ein. Wenn das Leuchtmittel 2 von der Halterung demontiert ist (Fig. 2), befinden sich die Schenkelteile 6a, 6b in einer Ruhelage, bei welcher der lichte Abstand zwischen den Halteteilen 8b, 8a kleiner ist als die entsprechende Querschnittsabmessung des zwischen die Halteteile 8b, 8a einzusetzenden Leuchtmittels 2.

Wenn das Leuchtmittel 2 zwischen die Halteteile 8b, 8a eingesetzt ist und sich die Halteteile 8b, 8a in Schließstellung befinden, ist der lichte Abstand zwischen den Halteteilen 8b, 8a größer als in der Ruhelage. Dadurch üben die Halteteile 8a, 8b eine mechanische Vorspannung auf das Leuchtmittel 2 aus, welche die Halteteile 8b, 8a jeweils an den ihnen zugewandten Randbereich des Leuchtmittels 2 andrückt.

In Fig. 1-4 ist erkennbar, dass der Quersteg an seiner dem Leuchtmittel 2 abgewandten Rückseite eine Verstärkungsrippe 11 aufweist, die mit ihrer Erstreckungsebene quer zur Erstreckungsebene des Leuchtmittels 2 und quer zu den Erstreckungsebenen der Schenkelteile 6a, 6b angeordnet ist. Durch die Verstärkungsrippe 11 wird die Biegesteifigkeit des Trägerteils für in Richtung des Doppelpfeils 10 an den Halteteilen 8b, 8a angreifende Biegemomente vergrößert und die mechanische Stabilität des Trägerteils wird erhöht.

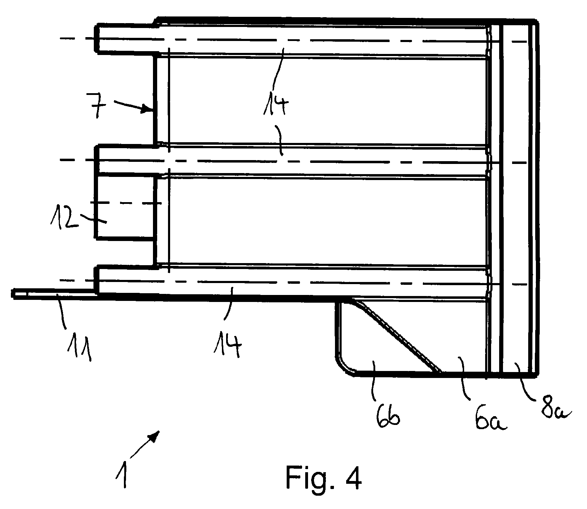

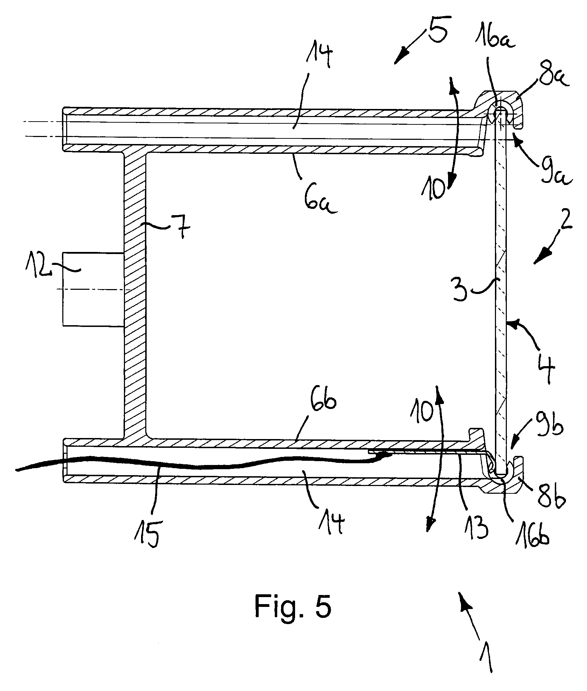

In Fig. 4 und 5 ist erkennbar, dass an der dem Leuchtmittel 2 abgewandten Rückseite des Querstegs 7 ein Befestigungsvorsprung 12 angeordnet ist, an dem die Beleuchtungseinrichtung direkt oder indirekt über wenigstens ein weiteres Teil mit der Karosserie des Kraftfahrzeugs verbindbar ist. Der Befestigungsvorsprung 12 kann mindestens eine Gewindebohrung aufweisen, die mit dem Gewinde einer die Fahrzeugkarosserie und/oder das weitere Teil durchsetzenden Halteschraube verschraubbar ist.

An den Halteteilen 8a, 8b sind elektrische elektrische Kontaktelemente 13 angeordnet, die jeweils in Schließstellung der Halteteile 8a, 8b an einem ihnen zugeordneten Anschlusskontakt des Leuchtmittels 2 zur Anlage kommen. In Fig. 5 ist erkennbar, dass die Kontaktelemente 13 als Federzungen ausgestaltet sind, die rechtwinklig zur Ebene des flächigen Basisteils 3 elastisch auslenkbar sind. Wenn das Leuchtmittel 2 in die Nuten der Halterung eingesetzt ist, liegen die Kontaktelemente 13 gegen die Rückstellkraft ihres Werkstoffs jeweils federnd an dem ihnen zugeordneten Anschlusskontakt des Basisteils 3 an.

In Fig. 5 ist außerdem erkennbar, dass in den Schenkelteilen 6a, 6b Kanäle 14 gebildet sind, die von den Nuten der Halteteile 8a, 8b zu der dem Leuchtmittel 2 abgewandten Rückseite der Halterung führen. Ein von dem Leuchtmittel 2 beabstandeter Abschnitt der Kontaktelemente 13 greift jeweils in einen ihm zugeordneten Kanal 14 ein. In dem Kanal 14 ist das Kontaktelemente 13 mit einer elektrischen Leitung 15 verbunden, die durch den Kanal 15 hindurch zu einer in der Zeichnung nicht näher dargestellten Ansteuereinrichtung für das Leuchtmittel 2 führt.

An seinen den Halteteilen 8a, 8b zugewandten Randbereichen des Basisteils 3 ist jeweils ein Dämpfungselement 16a, 16b vorgesehen. Die Dämpfungselemente 16a, 16b sind derart zwischen den Halteteilen 8a, 8b und den Randbereichen des Basisteils 3 angeordnet, dass die Dämpfungselemente 16a, 16b in Schließstellung der Halteteile 8a, 8b mit der von der Halterung aufgebrachten mechanischen Vorspannung beaufschlagt wird und die Dämpfungselemente 16a, 16b somit an die Halteteile 8a, 8b und das Basisteil angepresst werden.

Die Dämpfungselemente 16a, 16b sind etwa zylindersegmentförmig ausgestaltet und übergreifen jeweils einen Randbereich des Basisteils 3. In Fig. 1 und 5 ist erkennbar, dass die Dämpfungselemente 16a, 16b jeweils in die Nut 9a, 9b des ihnen zugeordneten Halteteiles 8a, 8b eingreifen. Dabei erstrecken sich die Dämpfungselemente 16a, 16b unterbrechungsfrei entlang der Nut 9a, 9b. Im Bereich der Kontaktelemente 13 weisen die Dämpfungselemente an der Rückseite des Basisteils jeweils eine randoffene Aussparung auf, durch welche das Kontaktelement den Anschlusskontakt des Basisteils 3 kontaktiert.

## Patentansprüche

1. Beleuchtungseinrichtung (1) für ein Kraftfahrzeug, mit einem elektrische Anschlusskontakte aufweisenden flächigen Leuchtmittel (2), insbesondere einem OLED, und mit einer Halterung (5), an der das Leuchtmittel (2) angeordnet ist, wobei die Halterung (5) zwischen einer Offen- und einer Schließstellung aufeinander zu- und voneinander wegbewegbare Halteteile (8a, 8b) und ein Trägerteil für die Halteteile (8a, 8b) aufweist, wobei die Halteteile (8a, 8b) in Schließstellung einander abgewandte Randbereiche des Leuchtmittels (2) derart übergreifen, dass das Leuchtmittel (2) zwischen den Halteteilen (8a, 8b) fixiert ist, und wobei die Halterung (5) an mindestens einem der Halteteile (8a, 8b) elektrische Kontaktelemente (13) aufweist, die in der Schließstellung der Halterung (5) jeweils an einem ihnen zugeordneten Anschlusskontakt des Leuchtmittels (2) zur Anlage kommen, **dadurch gekennzeichnet, dass** die Halteteile (8a, 8b) einstückig mit dem Trägerteil verbunden sind, und dass das Trägerteil derart elastisch verformbar ist, dass die Halteteile (8a, 8b) zwischen der Offen- und der Schließstellung aufeinander zudu voneinander wegbewegbar sind, und dass die lichte Weite zwischen Halteteilen (8a, 8b) derart auf die Abmessungen des Leuchtmittels (2) abgestimmt ist, dass die Halteteile (8a, 8b) in der Schließstellung eine mechanische Vorspannung auf das zwischen den Halteteilen (8a, 8b) angeordnete Leuchtmittel (2) ausüben.

2. Beleuchtungseinrichtung (1) nach Anspruch 1, **dadurch gekennzeichnet, dass** das Trägerteil etwa C-förmig ausgestaltet ist und zwei durch einen Quersteg (7) miteinander verbundene Schenkelteile (6a, 6b) aufweist, und dass die Halteteile (8a, 8b) an den von dem Quersteg (7) entfernten freien Endbereichen der Schenkelteile (6a, 6b) angeordnet sind.

3. Beleuchtungseinrichtung (1) nach Anspruch 2, **dadurch gekennzeichnet, dass** die der Schenkelteile (6a, 6b) durch einen Zwischenraum voneinander beabstandet sind, dass das flächige Leuchtmittel (2) lichtdurchlässig ist, und dass in dem Zwischenraum zwischen dem flächigen Leuchtmittel (2) und dem Quersteg (7) mindestens ein weiteres Leuchtmittel angeordnet ist, insbesondere eine Leuchtdiode und/oder eine Glühlampe.

4. Beleuchtungseinrichtung (1) nach Anspruch 2 oder 3, **dadurch gekennzeichnet, dass** die Anschlusskontakte an der dem Quersteg (7) zugewandten Rückseite des flächigen Leuchtmittels (2) angeordnet sind und dass die Kontaktelemente (13) als Federzungen ausgestaltet sind, die rechtwinklig zur Ebene des flächigen Leuchtmittels (2) elastisch auslenkbar sind.

5. Beleuchtungseinrichtung (1) nach einem der Ansprüche 2 bis 4, **dadurch gekennzeichnet, dass** in mindestens einem Schenkelteil (6a, 6b) ein Kanal (14) für die Aufnahme einer elektrischen Leitung (15) und/oder einer Leiterbahn vorgesehen ist., die mit einem Kontaktelement (13) verbunden ist.

6. Beleuchtungseinrichtung (1) nach einem der Ansprüche 1 bis 5, **dadurch gekennzeichnet, dass** die Halteteile (8a, 8b) einander zugewandte Nuten (9a, 9b) aufweisen, in welche die einander abgewandten Randbereiche des Leuchtmittels (2) eingreifen.

7. Beleuchtungseinrichtung (1) nach einem der Ansprüche 1 bis 6, **dadurch gekennzeichnet, dass** das flächige Leuchtmittel (2) ein flächiges Basisteil (3) mit mindestens einer daran angeordneten Lichtaustrittsfläche (4) aufweist, und dass an mindestens einem einem Halteteil (8a, 8b) zugewandten Randbereich des Basisteils (3) ein Dämpfungselement (16a, 16b) derart angeordnet ist, dass es in Schließstellung der Halteteile (8a, 8b) mit der mechanischen Vorspannung beaufschlagt wird.

8. Beleuchtungseinrichtung (1) nach Anspruch 7, **dadurch gekennzeichnet, dass** das Dämpfungselement (16a, 16b) einen etwa U-förmigen Querschnitt aufweist und den Randbereich des flächigen Basisteils (3) übergreift.

9. Beleuchtungseinrichtung (1) nach Anspruch 7 oder 8 jeweils in Rückbeziehung auf Anspruch 6, **dadurch gekennzeichnet, dass** das Dämpfungselement (16a, 16b) in die Nut (9a, 9b) des Halteteiles (8a, 8b) eingreift und sich entlang der Nut (9a, 9b) erstreckt, und dass das Dämpfungselement (16a, 16b) im Bereich mindestens eines Kontaktelements (13) eine Aussparung aufweist, in die das Kontaktelement (13) eingreift.

## Claims

1. Lighting unit (1) for a motor vehicle, having a flat light source (2) with electrical connecting contacts, in particular an OLED, and having a holder (5), on which the light source (2) is arranged, wherein the holder (5) has holding elements (8a, 8b) which can be moved towards one another and away from one another between an open-position and a closed-position, and a carrier part for the holding elements (8a, 8b),
wherein the holding elements (8a, 8b) in the closed position grip edges of the light source (2) facing away from each other so that the light source (2) is fixed between the holding elements (8a, 8b), and wherein the holder (5) has electrical contact elements (13) on at least one of the holding elements (8a, 8b) which in the closed position of the holder (5) each have contact with an assigned connecting contact of the light source (2),
**characterized in that**
the holding elements (8a, 8b) are integrally connected to the carrier part and that the carrier part is elastically deformable, that the holding elements (8a, 8b) can be moved towards one another and away from one another between the open position and the closed position, and that the clearance between the holding elements (8a, 8b) matches the dimensions of the light source (2) so that the holding elements (8a, 8b) in the closed position execute a mechanical bias on the light source (2) arranged between the holding elements (8a, 8b).

2. Lighting unit (1) according to Claim 1, **characterized in that** the carrier part is embodied approximately C-shaped and has two leg parts (6a, 6b) connected by means of a crossweb (7), and that the holding elements (8a, 8b) are arranged on the free end areas of the leg parts (6a, 6b) facing away from the crossweb (7).

3. Lighting unit (1) according to Claim 2, **characterized in that** the leg parts (6a, 6b) have a space between them, that the flat light source (2) is light-transmissive, and that at least one further light source is arranged in the space between the flat light source (2) and the crossweb (7), in particular a light emitting diode and/ or a light bulb.

4. Lighting unit (1) according to Claim 2 or 3, **characterized in that** the connecting contacts are arranged on the back of the flat light source (2) facing the crossweb (7) and that the contact elements (13) are embodied as flexible tongues being elastically deflectable at right angles to the plane of the flat light source (2).

5. Lighting unit (1) according to one of the Claims 2 to 4, **characterized in that** a channel (14) for the reception of an electrical line (15) and/or a strip conductor being connected to a contact element (13) is provided in at least one leg part (6a, 6b).

6. Lighting unit (1) according to one of the Claims 1 to 5, **characterized in that** the holding parts (8a, 8b) have grooves (9a, 9b) facing one another, in which the edges of the light source (2) facing away from each other engage.

7. Lighting unit (1) according to one of the Claims 1 to 6, **characterized in that** the flat light source (2) has a flat basic part (3) with at least one light exit surface (4) arranged on it, and that on at least one border area of the basic part (3) facing a holding element (8a, 8b), a damping element (16a, 16b) is arranged so that a mechanical bias is applied to it in the closed position of the holding part (8a, 8b).

8. Lighting unit (1) according to Claim 7, **characterized in that** the damping element (16a, 16b) has an approximately U-shaped cross-section and grips around the edge area of the flat basic part (3).

9. Lighting unit (1) according to Claim 7 or 8, each with reference to Claim 6, **characterized in that** the damping element (16a, 16b) engages in the groove (9a, 9b) of the holding element (8a, 8b) and extends along the groove (9a, 9b), and that the damping element (16a, 16b) has a recess in the area of at least one contact element (13), into which the contact element (13) engages.

## Revendications

1. Dispositif d'éclairage (1) pour un véhicule automobile avec un moyen d'éclairage plat (2) présentant des contacts de connexion électrique, surtout une OLED (diode électroluminescente organique), et avec un support (5) sur lequel le moyen d'éclairage est disposé, le support (5) présentant entre une position d'ouverture et une position de fermeture des pièces de maintien (8a, 8b) pouvant être déplacées l'une vers l'autre et éloignées l'une de l'autre et un élément de support pour les pièces de maintien (8a, 8b), les pièces de maintien (8a, 8b) en position de fermeture viennent en prise des zones de bord opposées du moyen d'éclairage (2) de telle manière que le moyen d'éclairage (2) soit fixé entre les pièces de maintien (8a, 8b) et le support (5) présentant sur au moins une des pièces de maintien (8a, 8b) des éléments de contact électriques (13), qui dans la position de fermeture du support (5) viennent en appui chaque fois sur un contact de connexion leur associé du moyen d'éclairage (2),
**caractérisé en ce que**
les pièces de maintien (8a, 8b) sont reliées d'une seule pièce avec l'élément de support et que l'élément de support est élastiquement déformable de telle manière que les pièces de maintien (8a, 8b) puissent être déplacées l'une vers l'autre et éloignées l'une de l'autre entre la position d'ouverture et la position de fermeture et que le diamètre intérieur entre les pièces de maintien (8a, 8b) est adapté de telle manière aux dimensions du moyen d'éclairage (2) que les pièces de maintien (8a, 8b) en position de fermeture exercent une précontrainte mécanique sur le moyen d'éclairage (2) disposé entre les pièces de maintien (8a, 8b).

2. Dispositif d'éclairage (1) selon la revendication 1, **caractérisé en ce que** l'élément de support est à peu près en forme de C et présente deux parties de branche (6a, 6b) reliées l'une à l'autre par une traverse (7) et que les pièces de maintien (8a, 8b) sont disposées sur les parties d'extrémité libres éloignées de la traverse (7) des parties de branche (6a, 6b).

3. Dispositif d'éclairage (1) selon la revendication 2, **caractérisé en ce que** les parties de branche (6a, 6b) sont distantes l'une de l'autre par un espace, que le moyen d'éclairage plat (2) est opaque et qu'au moins un autre moyen d'éclairage est disposé dans l'espace entre le moyen d'éclairage plat (2) et la traverse (7), surtout une diode électroluminescente et/ou une lampe.

4. Dispositif d'éclairage (1) selon la revendication 2 ou 3, **caractérisé en ce que** les contacts de connexion sont disposés sur la face arrière du moyen d'éclairage plat (2) tourné vers la traverse (7) et que les éléments de contact (13) sont réalisés en tant que languettes élastiques qui sont élastiquement déformables perpendiculairement au plan du moyen d'éclairage plat (2).

5. Dispositif d'éclairage (1) selon l'une des revendications 2 à 4, **caractérisé en ce qu**'au moins dans une partie de branche (6a, 6b) un conduit (14) est prévu pour recevoir un fil électrique (15) et/ou une piste conductrice qui est relié(e) à un élément de contact (13).

6. Dispositif d'éclairage (1) selon l'une des revendications 1 à 5, **caractérisé en ce que** les pièces de maintien (8a, 8b) présentent des rainures (9a, 9b) orientées les unes vers les autres dans lesquelles les zones de bord opposées du moyen d'éclairage (2) s'engrènent.

7. Dispositif d'éclairage (1) selon l'une des revendications 1 à 6, **caractérisé en ce que** le moyen d'éclairage plat (2) présente un élément de base plat (3) avec au moins une surface de sortie de lumière (4) disposée sur celui-ci et que sur au moins une zone de bord orientée vers une pièce de maintien (8a, 8b) de l'élément de base (3) un élément d'amortissement (16a, 16b) est disposé de telle manière qu'il soit soumis à la précontrainte mécanique en position de fermeture des pièces de maintien (8a, 8b).

8. Dispositif d'éclairage (1) selon la revendication 7, **caractérisé en ce que** l'élément d'amortissement (16a, 16b) présente une section transversale à peu près en forme de U et dépasse la zone de bord de l'élément de base plat (3).

9. Dispositif d'éclairage (1) selon la revendication 7 ou 8 dépendant chaque fois de la revendication 6, **caractérisé en ce que** l'élément d'amortissement (16a, 16b) s'engrène dans la rainure (9a, 9b) de la pièce de maintien (8a, 8b) et s'étend le long de la rainure (9a, 9b) et que l'élément d'amortissement (16a, 16b) présente un évidement dans la zone d'au moins un élément de contact (13) qui s'engrène dans l'élément de contact (13).
